# EUROPEAN PATENT SPECIFICATION

(11) **EP 1 851 034 B1**
(45) Date of publication and mention of the grant of the patent: **23.07.2008**
(21) Application number: 05821565.8
(22) Date of filing: 12.12.2005
(51) Int. Cl.: B29C 55/06

(54) **APPARATUS, FOR PULLING OR DRAGGING PLASTIC STRIPS, FOR EXAMPLE OF POLYPROPYLENE OR OF POLYETHYLENE, FOR THE PRODUCTION OF STRAPS, RAFFIA OR OF OTHER TYPES OF STRIPS**
VORRICHTUNG ZUM ZIEHEN VON KUNSTSTOFFBÄNDERN, ZUM BEISPIEL AUS POLYPROPYLEN ODER POLYETHYLEN, ZUR HERSTELLUNG VON GURTEN, RAFFIA ODER ANDEREN BANDARTEN
APPAREIL, POUR ETIRER OU TRAINER DES BANDES EN PLASTIQUE, PAR EXEMPLE, EN POLYPROPYLENE OU EN POLYETHYLENE, POUR LA PRODUCTION DE LANIERES EN RAPHIA OU AUTRES TYPES DE BANDES

(30) Priority: 23.12.2004 IT BO20040790
(43) Date of publication of application: 07.11.2007
(73) Proprietor: S.I.M.A.Società Industrie Meccaniche Affini a r.l, 40056-Crespellano (IT)
(72) Inventor: BOCCAFOGLI, Sergio, I-40128 Bologna (IT)
(74) Representative: Jorio, Paolo
(86) International application number: PCT/EP2005/056703
(87) International publication number: WO 2006/067065

(56) References cited:
- GB-A- 1 275 290
- US-A- 5 085 566

## Description

Apparatuses for the production of straps, raffia or other types of tapes or strips, usually of polypropylene and/or of polyethylene, hereinafter called "strips" for simplicity, are at present characterized by a considerable length and are therefore very unwieldy, yet have a very limited linear surface of contact with the strips.

US-A-5085566 discloses an apparatus according to the preamble of claim 1.

The invention aims to overcome these limitations of the prior art, with an apparatus as in the appended claims, with very compact dimensions with respect to length relative to the apparatus of the known type and with a larger surface of linear contact with the strips to be propelled, the characteristics and advantages of which will become clear from the following description of a preferred embodiment, illustrated purely as a non-limiting example, in the diagrams in the single attached sheet of drawings, in which:
- Fig. 1 is a schematic side view of a strip pulling group constructed according to the prior art;
- Fig. 2 is a side view of an improved strip pulling group according to the invention.

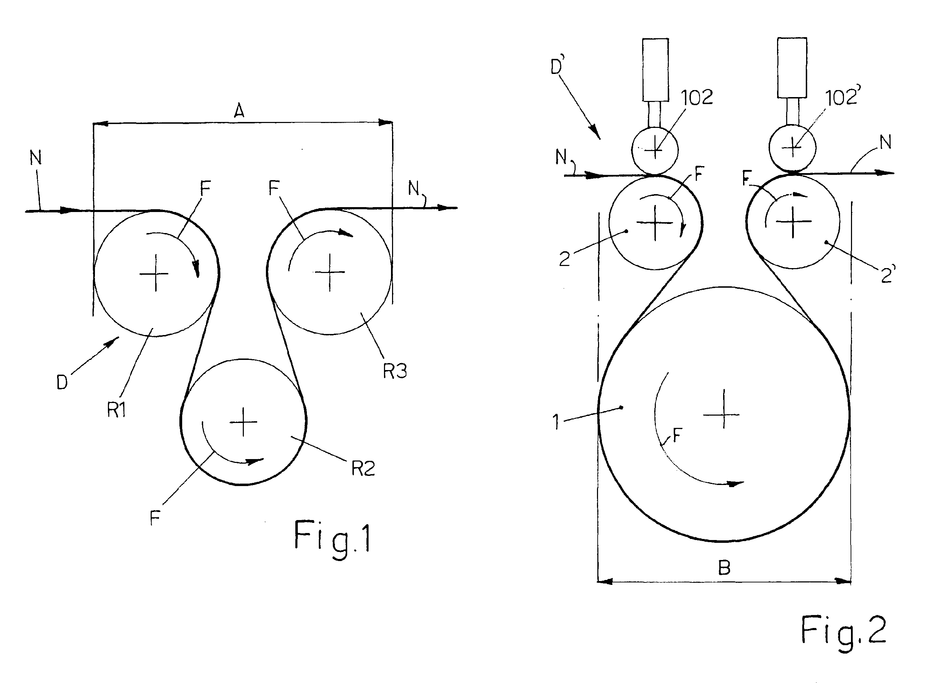

In Fig. 1, N indicates one of the strips of plastic material placed side by side, which must be pulled by motorized pulling groups D firstly through a stretching oven and then through a stabilization oven, as usually envisaged in processes for the production of raffia, straps or other strips in plastics, for example polypropylene and/or polyethylene. In apparatus of the known type, the strip pulling groups D are generally formed from a set of three rollers R1, R2 and R3 usually with their axes horizontal and parallel to each other, positioned at the vertices of an imaginary inverted isosceles triangle, and driven by electric motors with torque control, so as to operate with progressively increasing speeds, so that the strip N which is being carried tangentially on said rollers is always in tension. In the prior art, the rollers are of equal diameter, often with a value in the range 300-350 mm, for example about 318 mm. Every known pulling group D as in Fig. 1 currently has an overall longitudinal dimension A of about 700-750 mm and the rollers in said groups offer a linear surface of contact with the strips N, bearing in mind that the strips make contact with said rollers substantially for a half of their circumference, of about 1500 mm.

The invention proposes the construction of pulling groups D' as in Fig. 2, having a smaller overall longitudinal dimension than that of the known groups D and a surface of linear contact with the strips greater than that of the said known groups. To achieve these aims, the middle roller that is positioned at the vertex of the imaginary inverted triangle, the bottom roller 1, is made with a diameter greater than the sum of the diameters of the other two upper rollers 2, 2' which are advantageously of identical diameter, so that the overall dimension B of the entire pulling group corresponds substantially to the diameter of the larger roller 1.

Good results have been obtained for example using a middle roller 1 with a diameter of about 650 mm and end rollers 2, 2' with diameter of about 240 mm. The overall dimension B of the new pulling groups D' is thus 650 mm compared with the overall dimension A of 750 mm of the known groups D as in Fig. 1 and the surface of linear contact with the strips for said groups D', bearing in mind that the useful surface of contact of the middle roller 1 will be about ¾ of the total circumference of said roller, is about 2300 mm, against 1500 mm in the prior art.

Rollers 1, 2, 2' of the new pulling groups D' are also driven by electric motors with torque control, the side surface of said rollers can be chromium-plated or coated with ceramic, and it will be possible for some of these rollers to be temperature-controlled with forced circulation of a cooling or heating liquid in them, depending on the intended use of the pulling group.

As is envisaged in the prior art, it will be possible for rollers 2, 2' to be assisted by moving pressure rollers 102, 102' with the useful surface being of Vulcolan or some other suitable material, driven by respective servomechanisms, in order to keep the strips N correctly aligned on the pulling rollers in question.

## Claims

1. Apparatus for pulling or dragging extruded strips of plastics, for example of polypropylene or of polyethylene, in methods for the production of straps, raffia or other types of strips, of the type that comprises at least one set of three motorized rollers on which the strips are carried in succession so that they can be propelled by friction on contact with the surface of said rollers, **characterized in that** each group (D') for pulling the strips (N) is formed from a set of three suitably motorized rollers, positioned with their axes at the vertices of an inverted triangle, for example of an isosceles triangle with the vertex inverted and at which the axis of the middle roller (1) is positioned, having a diameter greater than the sum of the diameters of the other two upper end rollers (2, 2'), so that the overall dimension (B) of the pulling group (D') is not substantially greater than the diameter of said larger middle roller (1).

2. Apparatus according to claim 1, in which the end pulling rollers (2, 2') have equal diameters.

3. Apparatus according to the preceding claims, in which the middle roller (1) has a diameter between 500 and 800 mm, for example of about 650 mm whereas the end rollers (2, 2') have a diameter between 150 and 350 mm, for example about 240 mm, and said rollers are a suitable distance apart to facilitate passage of the strips (N) over them, but in such a way that the overall projection of the upper rollers does not extend, or only extends a little, beyond the overall projection of the middle roller (1).

4. Apparatus according to claim 3, in which the surface of linear contact with the strips, of the three rollers (1, 2, 2') of the pulling group (D'), is about 2300 mm, as against about 1500 mm in the prior art where three rollers of equal diameter of about 318 mm are used.

5. Apparatus according to the preceding claims, in which said pulling rollers (1, 2, 2') are driven by electric motors with torque control, have their side surface chromium-plated or coated with ceramic, and can be temperature-controlled fully or partly with forced internal circulation of a cooling or heating liquid, depending on the intended use of the pulling groups (D'), the end rollers (2, 2') being assisted by moving pressure rollers (102, 102') driven by respective servomechanisms and having a useful surface of Vulcolan or some other suitable material.

## Patentansprüche

1. Vorrichtung zum Ziehen extrudierter Kunststoffbänder, zum Beispiel aus Polypropylen oder aus Polyethylen, in Verfahren zur Herstellung von Gurten, Raffia oder anderen Bandarten, umfassend mindestens eine Gruppe aus drei motorisierten Rollen, auf denen die Bänder nacheinander gefördert werden, so dass sie durch Reibung bei Kontakt mit der Oberfläche der Rollen vorangetrieben werden können, **dadurch gekennzeichnet, dass** jede Gruppe (D') zum Ziehen der Bänder (N) aus einer Gruppe dreier zweckmäßig motorisierter Rollen gebildet wird, die mit ihren Achsen an den Ecken eines umgekehrten Dreiecks positioniert sind, beispielsweise eines gleichschenkligen Dreiecks, dessen Spitze umgekehrt ist und bei der die Achse der mittleren Rolle (1) positioniert ist, die einen Durchmesser hat, der größer ist als die Summe der Durchmesser der anderen beiden oberen Endrollen (2, 2'), so dass die Gesamtdimension (B) der Zuggruppe (D') nicht wesentlich größer ist als der Durchmesser der größeren mittleren Rolle (1).

2. Vorrichtung nach Anspruch 1, bei welcher die Durchmesser der Endzugrollen (2, 2') gleich groß sind.

3. Vorrichtung nach den vorangehenden Ansprüchen, bei welcher die mittlere Rolle (1) einen Durchmesser zwischen 500 und 800 mm, beispielsweise etwa 650 mm, aufweist, wohingegen die Endrollen (2, 2') einen Durchmesser zwischen 150 und 350 mm, beispielsweise etwa 240 mm, aufweisen, und die Rollen eine Strecke voneinander entfernt sind, die sich eignet, um die Passage der Bänder (N) über sie zu erleichtern, jedoch in solch einer Weise, dass sich die Gesamtprojektion der oberen Rollen nicht, oder nur wenig, über die Gesamtprojektion der mittleren Rolle (1) hinaus erstreckt.

4. Vorrichtung nach Anspruch 3, bei welcher die Fläche des linearen Kontakts mit den Bändern, und zwar der drei Rollen (1, 2, 2') der Zuggruppe (D'), etwa 2300 mm beträgt, gegenüber etwa 1500 mm nach Stand der Technik, wo drei Rollen mit gleichem Durchmesser von etwa 318 mm eingesetzt werden.

5. Vorrichtung nach den vorangehenden Ansprüchen, bei welcher die Zugrollen (1, 2, 2') durch elektrische Motoren mit Drehmomentregelung angetrieben werden, ihre Seitenfläche verchromt oder keramikbeschichtet ist, und sie mit innerem Zwangsumlauf einer Kühl- oder Heizflüssigkeit vollständig oder teilweise temperaturgeregelt werden können, in Abhängigkeit von der beabsichtigten Verwendung der Zuggruppen (D'), wobei die Endrollen (2, 2') unterstützt werden durch Bewegen von Druckrollen (102, 102'), die von jeweiligen Servomechanismen angetrieben werden und eine nützliche Fläche aus Vulkollan oder irgendeinem anderen geeigneten Material aufweisen.

## Revendications

1. Appareil pour tirer ou entraîner des bandes extrudées en matière plastique, par exemple en polypropylène ou en polyéthylène, dans des procédés de production de liens, de raphia ou d'autres types de bandes, du type qui comprend au moins un ensemble de trois rouleaux motorisés sur lesquels les bandes sont portées successivement de sorte à pourvoir être entraînées par frottement au contact avec la surface desdits rouleaux, **caractérisé en ce que** chaque groupe (D') pour tirer les bandes (N) est formé d'un ensemble de trois rouleaux motorisés de manière appropriée, positionnés avec leurs axes aux sommets d'un triangle inversé, par exemple d'un triangle isocèle dont le sommet est inversé et auquel est positionné l'axe du rouleau intermédiaire (1) dont le diamètre est supérieur à la somme des diamètres des deux rouleaux supérieurs d'extrémité (2, 2'), de sorte que la dimension totale (B) du groupe de traction (D') ne soit pas sensiblement supérieure au diamètre dudit rouleau intermédiaire plus grand (1).

2. Appareil selon la revendication 1, dans lequel les rouleaux de traction d'extrémité (2, 2') ont des diamètres égaux.

3. Appareil selon l'une quelconque des revendications précédentes, dans lequel le rouleau intermédiaire (1) a un diamètre de 500 à 800 mm, par exemple d'environ 650 mm, tandis que les rouleaux d'extrémité (2, 2') ont un diamètre de 150 à 350 mm, par exemple d'environ 240 mm, et lesdits rouleaux sont séparés par une distance approprié pour faciliter le passage des bandes (N) sur ceux-ci, mais de manière telle que la projection totale des rouleaux supérieurs ne s'étende pas, ou s'étende juste un peu au-delà de la projection totale du rouleau intermédiaire (1).

4. Appareil selon la revendication 3, dans lequel la surface de contact linéaire des trois rouleaux (1, 2, 2') du groupe de traction (D') avec les bandes est d'environ 2.300 mm, au lieu de 1.500 mm dans l'art antérieur dans lequel trois rouleaux d'un diamètre égal d'environ 318 mm sont utilisés.

5. Appareil selon l'une quelconque des revendications précédentes, dans lequel lesdits rouleaux de traction (1, 2, 2') sont entraînés par des moteurs électriques avec correcteur de couple, leur surface latérale étant plaquée de chrome ou revêtue de céramique, et leur température peut être entièrement ou partiellement régulée par circulation interne forcée d'un liquide de refroidissement ou de chauffage, en fonction de l'utilisation prévue des groupes d'étirage (D'), les rouleaux d'extrémité (2, 2') étant assistés par des rouleaux de pression mobiles (102, 102') entraînés par des servomécanismes respectifs et ayant une surface utile en Vulcolan ou en un autre matériau approprié.
